# EUROPEAN PATENT APPLICATION

(11) **EP 4 694 510 A1**
(43) Date of publication of application: **11.02.2026**
(21) Application number: 24785371.6
(22) Date of filing: 08.04.2024
(51) Int. Cl.: H04W 72/53, H04W 72/12, H04W 72/04, H04W 72/232, H04W 72/21, H04L 5/00, H04W 72/11

(54) **METHOD, USER EQUIPMENT, PROCESSING DEVICE, AND STORAGE MEDIUM FOR TRANSMITTING UPLINK SIGNAL, AND METHOD AND BASE STATION FOR RECEIVING UPLINK SIGNAL**

(30) Priority: 06.04.2023 KR 20230045721; 27.09.2023 KR 20230131241
(71) Applicant: LG Electronics Inc., Yeongdeungpo-gu Seoul 07336 (KR)
(72) Inventor: BAE, Duckhyun, Seoul 06772 (KR); YANG, Suckchel, Seoul 06772 (KR); KIM, Jaehyung, Seoul 06772 (KR); KIM, Seonwook, Seoul 06772 (KR)
(74) Representative: Jung, Minkyu
(86) International application number: PCT/KR2024/004639
(87) International publication number: WO 2024/210677

(57) **Abstract**

A UE may: receive a PUSCH configuration; transmit first unused occasion information including information on a PUSCH occasion unused by the UE among a first set of PUSCH occasions related to the PUSCH configuration; and transmit second unused occasion information including information on a PUSCH occasion unused among a second set of PUSCH occasions related to the PUSCH configuration. On the basis that the second set of PUSCH occasions includes a first PUSCH occasion indicated as being unused by the first unused occasion information, the UE may continuously indicate the first PUSCH occasion as being unused by using the second unused occasion information.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

There is a need for a method for efficiently transmitting data packets where jitter may occur in a wireless communication system.

A method for minimizing waste of radio resources based on semi-persistent scheduling or configured grants is required.

A method for efficiently informing a base station of the actual use of radio resources scheduled to a user equipment is required.

The objects to be achieved with the present disclosure are not limited to what has been particularly described hereinabove and other objects not described herein will be more clearly understood by persons skilled in the art from the following detailed description.

### Technical Solution

In an aspect of the present disclosure, a method for transmitting an uplink signal by a user equipment (UE) in a wireless communication system is provided. The method includes receiving a physical uplink shared channel (PUSCH) configuration, transmitting first unused occasion information including information regarding a PUSCH occasion unused by the UE in a first set of PUSCH occasions related to the PUSCH configuration, and transmitting second unused occasion information including information regarding an unused PUSCH occasion in a second set of PUSCH occasions related to the PUSCH configuration. Based on the second set of PUSCH occasions including a first PUSCH occasion indicated as unused by the first unused occasion information, the UE continues to indicate the first PUSCH occasion as unused by the second unused occasion information.

In another aspect of the present disclosure, a UE for transmitting an uplink signal in a wireless communication system is provided. The UE includes at least one transceiver, at least one processor, and at least one computer memory operably connectable to the at least one processor, and storing instructions which, when executed, cause the at least one processor to perform operations. The operations include receiving a PUSCH configuration, transmitting first unused occasion information including information regarding a PUSCH occasion unused by the UE in a first set of PUSCH occasions related to the PUSCH configuration, and transmitting second unused occasion information including information regarding an unused PUSCH occasion in a second set of PUSCH occasions related to the PUSCH configuration. Based on the second set of PUSCH occasions including a first PUSCH occasion indicated as unused by the first unused occasion information, the UE continues to indicate the first PUSCH occasion as unused by the second unused occasion information.

In another aspect of the present disclosure, a processing device in a wireless communication system is provided. The processing device includes at least one processor, and at least one computer memory operably connectable to the at least one processor, and storing instructions which, when executed, cause the at least one processor to perform operations. The operations include receiving a PUSCH configuration, transmitting first unused occasion information including information regarding a PUSCH occasion unused by a UE in a first set of PUSCH occasions related to the PUSCH configuration, and transmitting second unused occasion information including information regarding an unused PUSCH occasion in a second set of PUSCH occasions related to the PUSCH configuration. Based on the second set of PUSCH occasions including a first PUSCH occasion indicated as unused by the first unused occasion information, the UE continues to indicate the first PUSCH occasion as unused by the second unused occasion information.

In another aspect of the present disclosure, a computer-readable storage medium is provided. The storage medium stores at least one program code including instructions which, when executed, cause at least one processor to perform operations. The operations include receiving a PUSCH configuration, transmitting first unused occasion information including information regarding a PUSCH occasion unused by a UE in a first set of PUSCH occasions related to the PUSCH configuration, and transmitting second unused occasion information including information regarding an unused PUSCH occasion in a second set of PUSCH occasions related to the PUSCH configuration. Based on the second set of PUSCH occasions including a first PUSCH occasion indicated as unused by the first unused occasion information, the UE continues to indicate the first PUSCH occasion as unused by the second unused occasion information.

In another aspect of the present disclosure, a method for receiving an uplink signal from a UE by a base station (BS) in a wireless communication system includes transmitting a PUSCH configuration, receiving first unused occasion information including information regarding a PUSCH occasion unused by the UE in a first set of PUSCH occasions related to the PUSCH configuration, and receiving second unused occasion information including information regarding an unused PUSCH occasion in a second set of PUSCH occasions related to the PUSCH configuration. Based on the second set of PUSCH occasions including a first PUSCH occasion indicated as unused by the first unused occasion information, the first PUSCH occasion is continuously indicated as unused by the second unused occasion information.

In another aspect of the present disclosure, a BS for receiving an uplink signal from a UE in a wireless communication system is provided. The BS includes at least one transceiver, at least one processor, and at least one computer memory operably connectable to the at least one processor, and storing instructions which, when executed, cause the at least one processor to perform operations. The operations include transmitting a PUSCH configuration, receiving first unused occasion information including information regarding a PUSCH occasion unused by the UE in a first set of PUSCH occasions related to the PUSCH configuration, and receiving second unused occasion information including information regarding an unused PUSCH occasion in a second set of PUSCH occasions related to the PUSCH configuration. Based on the second set of PUSCH occasions including a first PUSCH occasion indicated as unused by the first unused occasion information, the first PUSCH occasion is continuously indicated as unused by the second unused occasion information.

In each aspect of the present disclosure, based on the second set of PUSCH occasions including the first PUSCH occasion indicated as unused by the second unused occasion information, the UE may not be allowed to indicate the first PUSCH occasion as not unused by the second unused occasion information.

In each aspect of the present disclosure, based on the second set of PUSCH occasions including a second PUSCH occasion indicated as not unused by the second unused occasion information, the UE may be allowed to indicate the second PUSCH occasion as unused by the second unused occasion information.

In each aspect of the present disclosure, the first unused occasion information may indicate whether each PUSCH occasion in the first set of PUSCH occasions is unused, and the second unused occasion information may indicate whether each PUSCH occasion in the second set of PUSCH occasions is unused.

In each aspect of the present disclosure, the first unused occasion information may be transmitted on a first PUSCH based on the PUSCH configuration, and the second unused occasion information may be transmitted on a second PUSCH based on the PUSCH configuration.

In each aspect of the present disclosure, the UE may not transmit a PUSCH at a PUSCH occasion indicated as unused by the first unused occasion information or the second unused occasion information.

In each aspect of the present disclosure, the method or the operations may further include determining the first unused occasion information to be invalid, based on receiving activation downlink control information (DCI), release DCI, or radio resource control (RRC) reconfiguration information related to the PUSCH configuration after transmitting the first unused occasion information.

The foregoing solutions are merely a part of the examples of the present disclosure and various examples into which the technical features of the present disclosure are incorporated may be derived and understood by persons skilled in the art from the following detailed description.

### Advantageous Effects

According to some implementations of the present disclosure, it is possible to reduce the waste of radio resources configured for data packets where jitter may occur.

According to some implementations of the present disclosure, radio resources based on a configured grant (CG) configuration may be used for other transmissions.

According to some implementations of the present disclosure, the actual use of radio resources scheduled to a user equipment (UE) may be efficiently reported to a base station (BS).

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, The accompanying drawings, which are included to provide a further understanding of the present disclosure, illustrate examples of implementations of the present disclosure and together with the detailed description serve to explain implementations of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;
FIG. 7 illustrates a hybrid automatic repeat request-acknowledgement (HARQ-ACK) transmission/reception procedure;
FIG. 8 illustrates an operation flow of a user equipment (UE) according to some implementations of the present disclosure;
FIG. 9 illustrates an operation flow of a base station (BS) according to some implementations of the present disclosure;
FIG. 10 illustrates signal transmission/reception flows of a UE and BS according to some implementations in the present disclosure;
FIG. 11 illustrates CG PUSCHs configured according to some implementations of the present disclosure;
FIG. 12 illustrates CG PUSCHs to be transmitted/not transmitted by a UE;
FIG. 13 illustrates exemplary unused resource information (URI) transmissions;
FIG. 14 illustrates a flow of uplink signal transmission at a UE according to some implementations of the present disclosure; and
FIG. 15 illustrates a flow of uplink signal reception at a BS according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption." This also may mean that a channel reception entity receives or decodes the channel in the form of conforming to the "assumption" on the premise that the channel has been transmitted in compliance with the "assumption."

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH cell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to as a new RAT (NR) or fifth-generation (5G) RAT, and a system using NR or supporting NR is referred to as an NR system.

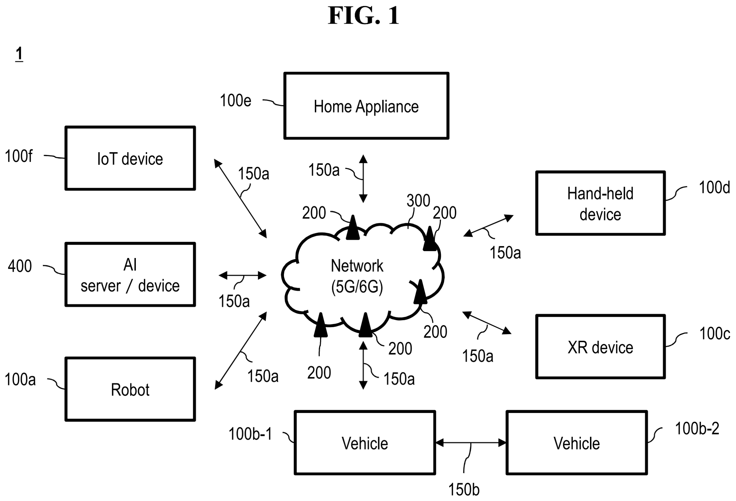

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

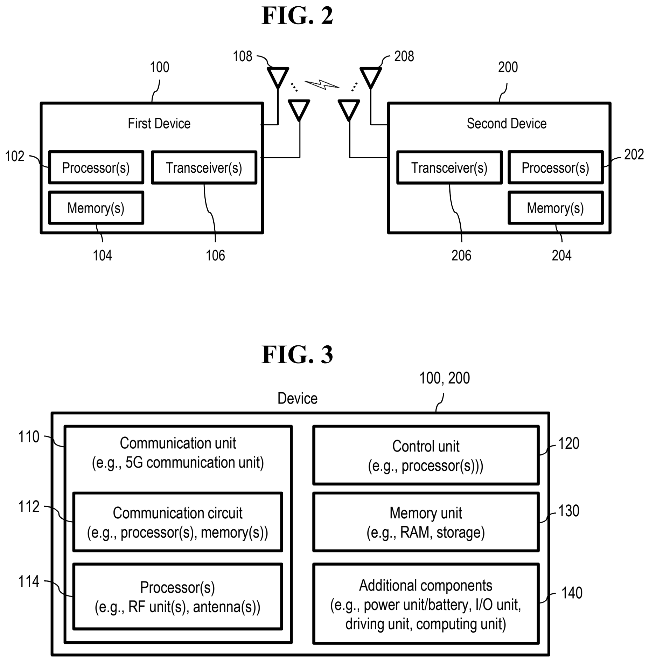

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

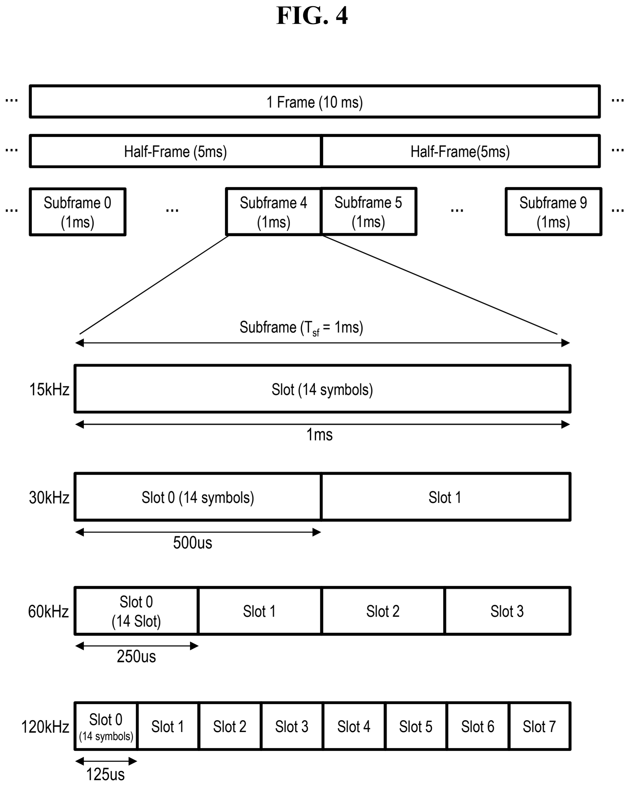

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f} = 4096. For reference, a basic time unit for LTE is Tₛ = 1/(△f_{ref}*N_{f,ref}) where △f_{ref} = 15*10³ Hz and N_{f,ref} = 2048. Tₛ and T_{c} have the relationship of a constant κ = Tₛ/T_{c} = 64. Each half-frame inludes 5 subframes and a duration T_{sf} of a single subframe is 1 ms. Subframes are further divided into slots and the number of slots in a subframe depends on an SCS. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subtrame,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the SCS △f = 2^{u*}15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For an SCS configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

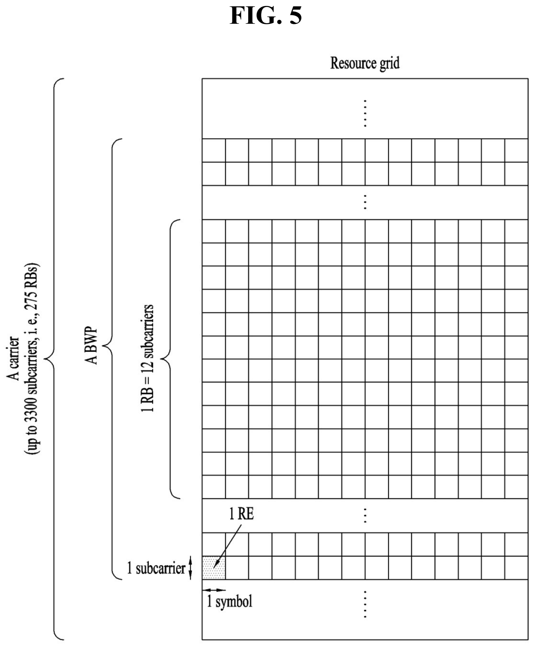

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}ₛₑ is typically 12. There is one resource grid for a given antenna port *p,* an SCS configuration *u,* and a transmission link (DL or UL). The carrier bandwidth *N*^{size,u}_{grid} for the SCS configuration u is given to the UE by a higher layer parameter (e.g., RRC parameter). Each element in the resource grid for the antenna port *p* and the SCS configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the SCS configuration *u.* The center of subcarrier 0 of CRB 0 for the SCS configuration *u* is equal to 'Point A' which serves as a common reference point for RB grids. The PRBs for subcarrier spacing configuration u are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}BWP = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

The UE for which carrier aggregation is configured may be configured to use one or more cells. If the UE is configured with a plurality of serving cells, the UE may be configured with one or multiple cell groups. The UE may also be configured with a plurality of cell groups associated with different BSs. Alternatively, the UE may be configured with a plurality of cell groups associated with a single BS. Each cell group of the UE includes one or more serving cells and includes a single PUCCH cell for which PUCCH resources are configured. The PUCCH cell may be a Pcell or an Scell configured as the PUCCH cell among Scells of a corresponding cell group. Each serving cell of the UE belongs to one of cell groups of the UE and does not belong to a plurality of cells.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | *15,* 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to an HARQ-ACK codebook. In particular, a bit sequence in which HARQ-ACK information bits are arranged according to a predetermined rule is called an HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as an HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 4.

### (0) PUCCH format 0 (PF0 or F0)

- Supported UCI payload size: up to K bits (e.g., K=2)
- Number of OFDM symbols constituting a single PUCCH: 1 to X symbols (e.g., X=2)
- Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
- Configuration for PUCCH format 0 includes the following parameters for a corresponding PUCCH resource: an index for initial cyclic shift, the number of symbols for PUCCH transmission, and/or the first symbol for PUCCH transmission.

### (1) PUCCH format 1 (PF1 or F1)

- Supported UCI payload size: up to K bits (e.g., K=2)
- Number of OFDM symbols constituting a single PUCCH: Y to Z symbols (e.g., Y=4 and Z=14)
- Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
- Configuration for PUCCH format 1 includes the following parameters for a corresponding PUCCH resource: an index for initial cyclic shift, the number of symbols for PUCCH transmission, the first symbol for PUCCH transmission, and/or an index for the OCC.

### (2) PUCCH format 2 (PF2 or F2)

- Supported UCI payload size: more than K bits (e.g., K=2)
- Number of OFDM symbols constituting a single PUCCH: 1 to X symbols (e.g., X=2)
- Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
- Configuration for PUCCH format 2 includes the following parameters for a corresponding PUCCH resource: the number of PRBs, the number of symbols for PUCCH transmission, and/or the first symbol for PUCCH transmission.

### (3) PUCCH format 3 (PF3 or F3)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).

Configuration for PUCCH format 3 includes the following parameters for a corresponding PUCCH resource: the number of PRBs, the number of symbols for PUCCH transmission, and/or the first symbol for PUCCH transmission.

### (4) PUCCH format 4 (PF4 or F4)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
- Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 4**

| PUCCH format | Length in OFDM symbols N^{PUCCH}_{symb} | Number of bits | Usage | Etc. |
|---|---|---|---|---|
| 0 | 1-2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
   ...
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 4).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

Hereinafter, resource allocation by the PDCCH and resource allocation by RRC will be described in more detail.

### * Resource Allocation by PDCCH: dynamic grant/assignment

The PDCCH may be used to schedule DL transmission on the PDSCH and UL transmission on the PUSCH. DCI on the PDCCH for scheduling DL transmission may include DL resource assignment that at least includes a modulation and coding format (e.g., modulation and coding scheme (MCS)) index *I*_{MCS}), resource allocation, and HARQ information, associated with a DL-SCH. DCI on the PDCCH for scheduling UL transmission may include a UL scheduling grant that at least includes a modulation and coding format, resource allocation, and HARQ information, associated with a UL-SCH. HARQ information on a DL-SCH or UL-SCH may include a new information indicator (NDI), transport block size (TBS), redundancy version (RV), and HARQ process ID (i.e., HARQ process number). The size and usage of the DCI carried by one PDCCH differs according to a DCI format. For example, DCI format 0_0, DCI format 0_1, or DCI format 0_2 may be used to schedule the PUSCH, and DCI format 1_0, DCI format 1_1, or DCI format 1_2 may be used to schedule the PDSCH. Particularly, DCI format 0_2 and DCI format 1_2 may be used to schedule transmission having higher transmission reliability and lower latency requirements than transmission reliability and latency requirement guaranteed by DCI format 0_0, DCI format 0_1, DCI format 1_0, or DCI format 1_1. Some implementations of the present disclosure may be applied to UL data transmission based on DCL format 0_2. Some implementations of the present disclosure may be applied to DL data reception based on DCI format 1_2.

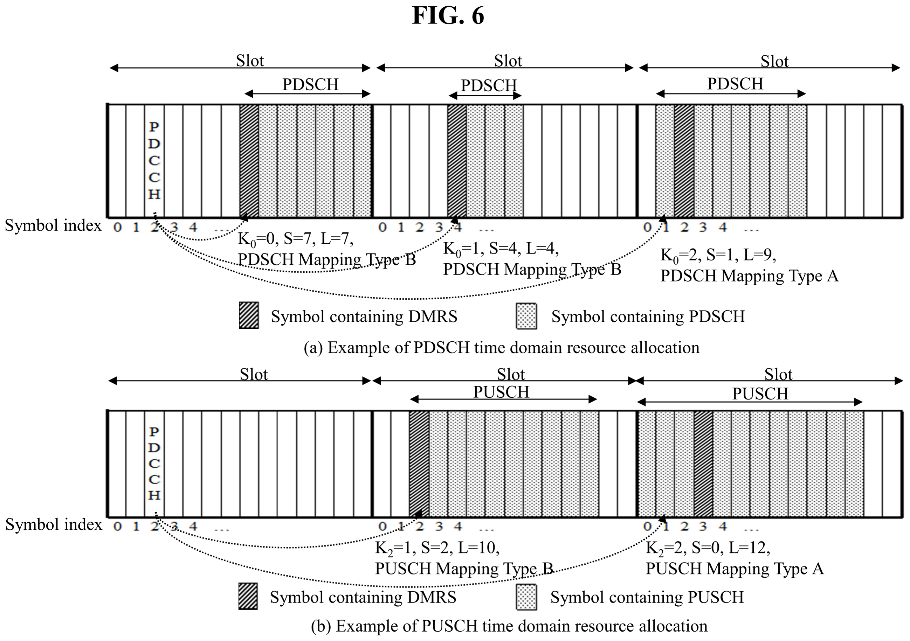

FIG. 6 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator value *SLIV* (or directly, a start position (e.g., starting symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., starting symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the starting symbol S relative to the start of the slot with the PDSCH or PUSCH and the number of consecutive symbols, *L,* counting from the symbol *S*. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in the present disclosure, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

### * Resource Allocation by RRC

As mentioned above, there are two types of transmission without dynamic grant: configured grant Type 1 and configured grant Type 2. In configured grant Type 1, a UL grant is provided by RRC and stored as a configured UL grant. In configured grant Type 2, the UL grant is provided by the PDCCH and stored or cleared as the configured UL grant based on L1 signaling indicating configured UL grant activation or deactivation. Type 1 and Type 2 may be configured by RRC per serving cell and per BWP. Multiple configurations may be active simultaneously on different serving cells.

When configured grant Type 1 is configured, the UE may be provided with the following parameters through RRC signaling:
- *cs-RNTI* corresponding to a CS-RNTI for retransmission;
- *periodicity* corresponding to a periodicity of configured grant Type 1;
- *timeReferenceSFN* indicating a system frame number (SFN) used for determining the offset of resources in the time domain;
- *timeDomainOffset* corresponding to an offset associated with a reference SFN indicated by *timeReferenceSFN*;
- *timeDomainAllocation* value *m* that provides a row index *m*+1 pointing to the allocation table, indicating a combination of the starting symbol *S*, the length *L,* and the PUSCH mapping type;
- *frequencyDomainAllocation* that provides frequency domain resource allocation; and
- *mcsAndTBS* that provides *I*_{MCS} indicating a modulation order, a target code rate, and a transport block size.

Upon configuration of configured grant Type 1 for a serving cell by RRC, the UE stores the UL grant provided by RRC as a configured UL grant for an indicated serving cell and initializes or re-initializes the configured UL grant to start in a symbol according to *timeDomainOffset* and S (derived from *SLIV*) and to recur with *periodicity.* After the UL grant is configured for configured grant Type 1, the UE may consider that the UL grant recurs in association with each symbol satisfying: [(SFN ** numberOfSlotsPerFrame * numberOfSymbolsPerSlot +* (slot number in the frame * *numberOfSymbolsPerSlot) +* symbol number in the slot] *=* (*timeReferenceSFN * numberOfSlotsPerFrame * numberOfSymbolsPerSlot + timeDomainOffset * numberOfSymbolsPerSlot + S +* N ** periodicity*) modulo (1024 * *numberOfSlotsPerFrame * numberOfSymbolsPerSlot*)*,* for N >= 0, where *numberOfSlotsPerFrame* and *numberOfSymbolsPerSlot* indicate the number of consecutive slots per frame and the number of consecutive OFDM symbols per slot, respectively (refer to Table 1 and Table 2). Here, 'SFN' refers to the SFN of a frame where the UL grant may occur, 'slot number' refers to the slot number of a slot within the frame where the UL grant may occur, and 'symbol number' refers to the symbol number of a symbol within the slot where the UL grant may occur.

For configured grant Type 2, the UE may be provided with the following parameters by the BS through RRC signaling:
- *cs-RNTI* corresponding to a CS-RNTI for activation, deactivation, and retransmission; and
- *periodicity* that provides a periodicity of configured grant Type 2.

An actual UL grant is provided to the UE by the PDCCH (addressed to the CS-RNTI). After the UL grant is configured for configured grant Type 2, the UE may consider that the UL grant recurs in association with each symbol satisfying: [(SFN ** numberOfSlotsPerFrame * numberOfSymbolsPerSlot*) + (slot number in the frame * *numberOfSymbolsPerSlot) +* symbol number in the slot] = [(SFN_{start time} * *numberOfSlotsPerFrame * numberOfSymbolsPerSlot* + slot_{start time} ** numberOfSymbolsPerSlot +* symbol_{start time}) + N ** periodicity*] modulo (1024 * *numberOfSlotsPerFrame * numberOfSymbolsPerSlot*)*,* for all N >= 0, where SFN_{start time}, slot_{start time}, and symbol_{start time} represent an SFN, a slot, and a symbol, respectively, of the first transmission opportunity of the PUSCH after the configured grant is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2). Here, 'SFN' refers to the SFN of a frame where the UL grant may occur, 'slot number' refers to the slot number of a slot within the frame where the UL grant may occur, and 'symbol number' refers to the symbol number of a symbol within the slot where the UL grant may occur.

In some scenarios, a parameter *harq-ProcID-Offset* and/or a parameter *harq-ProcID-Offset2* used to derive HARQ process IDs for configured UL grants may be further provided by the BS to the UE. *harq-ProcID-Offset* is an offset of an HARQ process for a configured grant for operation with shared spectrum channel access, and *harq-ProcID-Offset2* is an offset of an HARQ process for a configured grant. In the present disclosure, *cg-RetransmissionTimer* is a duration after (re)transmission based on a configured grant in which the UE should not autonomously perform retransmission based on the HARQ process of the (re)transmission. *cg-RetransmissionTimer* may be provided to the UE by the BS when retransmission on a configured UL grant is configured. For configured grants configured with neither *harq-ProcID-Offset* nor *cg-RetransmissionTimer,* the HARQ process ID associated with the first symbol of UL transmission may be derived from the following equation: HARQ Process ID = [floor(CURRENT_symbol/*periodicity*)] modulo *nrofHARQ-Processes.* For configured UL grants with *harq-ProcID-Offset2,* the HARQ process ID associated with the first symbol of UL transmission may be derived from the following equation: HARQ Process ID = [floor(CURRENT_symbol / *periodicity*)] modulo *nrofHARQ-Processes + harq-ProcID-Offset2,* where CURRENT_symbol = (SFN * *numberOfSlotsPerFrame * numberOfSymbolsPerSlot* + slot number in the frame ** numberOfSymbolsPerSlot +* symbol number in the slot), and *numberOfSlotsPerFrame* and *numberOfSymbolsPerSlot* denote the number of consecutive slots per frame and the number of consecutive OFDM symbols per slot, respectively. For configured UL grants with *cg-RetransmissionTimer,* the UE may select an HARQ process ID from among HARQ process IDs available for the configured grant configuration.

On DL, the UE may be configured with semi-persistent scheduling (SPS) per serving cell and per BWP by RRC signaling from the BS. For DL SPS, DL assignment is provided to the UE by the PDCCH and stored or cleared based on L1 signaling indicating SPS activation or deactivation. If SPS is configured, the UE may receive the following parameters from the BS through RRC signaling (e.g., SPS configuration) used to configure semi-persistent transmission:
- *cs-RNTI* corresponding to a CS-RNTI for activation, deactivation, and retransmission;
- *nrofHARQ-Processes* that provides the number of HARQ processes for SPS;
- *periodicity* that provides a periodicity of configured DL assignment for SPS;
- *n1PUCCH-AN* that provides an HARQ resource for a PUCCH for SPS (the network configures the HARQ resource as format 0 or format 1, and the actual PUCCH resource is configured by *PUCCH-Config* and referred to in *n1PUCCH-AN* by the ID thereof).

Multiple DL SPS configurations may be configured within the BWP of a serving cell. After DL assignment is configured for SPS, the UE may consider sequentially that N-th DL assignment occurs in a slot satisfying: (*numberOfSlotsPerFrame ** SFN + slot number in the frame) = [(*numberOfSlotsPerFrame ** SFN_{start time} + slot_{start time}) + N * *periodicity * numberOfSlotsPerFrame* / *10]* modulo (1024 ** numberOfSlotsPerFrame*)*,* where SFN_{start time} and slot_{start time} represent an SFN and a slot, respectively, of first transmission of the PDSCH after configured DL assignment is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2). Here, 'SFN' refers to the SFN of a frame where the DL assignment may occur, and 'slot number' refers to the slot number of a slot within the frame where the DL assignment may occur.

In some scenarios, a parameter *harq-ProcID-Offset* used to derive HARQ process IDs for configured DL assignments may be further provided by the BS to the UE. *harq-ProcID-Offset* is an offset of an HARQ process for SPS. For configured DL assignments without *harq-ProcID-Offset,* an HARQ process ID associated with a slot in which DL transmission starts may be determined from the following equation: HARQ Process ID = [floor (CURRENT_slot * 10 / (*numberOfSlotsPerFrame * periodicity*))] modulo *nrofHARQ-Processes,* where CURRENT_slot = [(SFN * *numberOfSlotsPerFrame*) + slot number in the frame], and *numberOfSlotsPerFrame* denotes the number of consecutive slots per frame. For configured DL assignments with *harq-ProcID-Offset,* an HARQ process ID associated with a slot in which DL transmission starts may be determined from the following equation: HARQ Process ID = [floor (CURRENT_slot / periodicity)] modulo nrofHARQ-Processes + harq-ProcID-Offset, where CURRENT _slot = [(SFN * numberOfSlotsPerFrame) + slot number in the frame], and *numberOfSlotsPerFrame* denotes the number of consecutive slots per frame.

If the CRC of a corresponding DCI format is scrambled with the CS-RNTI provided by the RRC parameter *cs-RNTI,* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 5 and Table 6. Table 5 shows an example of special fields for DL SPS and UL grant Type 2 scheduling activation PDCCH validation, and Table 6 shows an example of special fields for DL SPS and UL grant Type 2 scheduling release PDCCH validation.

**Table 5**

| | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

**Table 6**

| | DCI format 0_0 | DCI format 1_0 |
|---|---|---|
| HARQ process number | set to all '0's | set to all '0's |
| Redundancy version | set to '00' | set to '00' |
| Modulation and coding scheme | set to all '1's | set to all '1's |
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

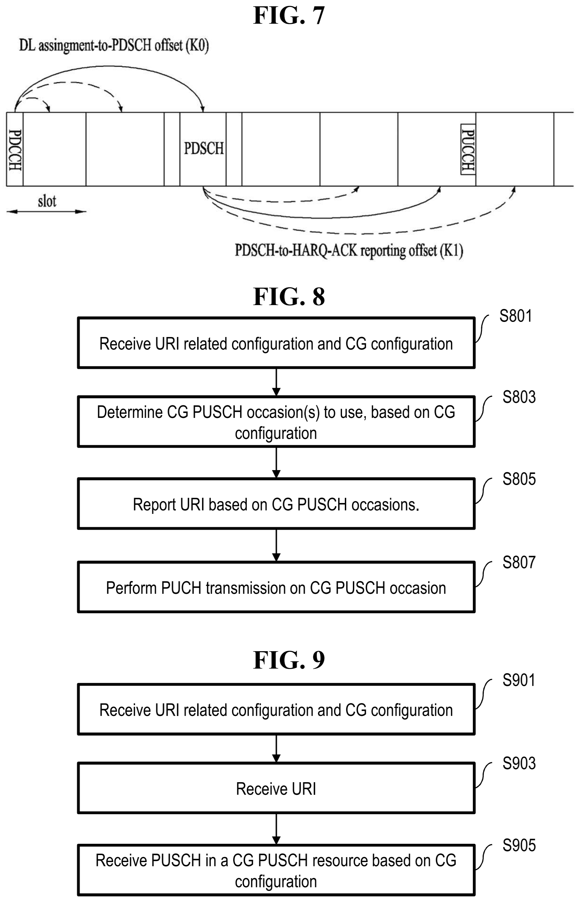

FIG. 7 illustrates an HARQ-ACK transmission/reception procedure.

Referring to FIG. 7, the UE may detect a PDCCH in a slot n. Next, the UE may receive a PDSCH in a slot n+K0 according to scheduling information received through the PDCCH in the slot n and then transmit UCI through a PUCCH in a slot n+K1. In this case, the UCI includes an HARQ-ACK response for the PDSCH.

The DCI (e.g., DCI format 1_0 or DCI format 1_1) carried by the PDCCH for scheduling the PDSCH may include the following information.
- FDRA: FDRA indicates an RB set allocated to the PDSCH.
- TDRA: TDRA indicates a DL assignment-to-PDSCH slot offset K0, the start position (e.g., symbol index S) and length (e.g., the number of symbols, L) of the PDSCH in a slot, and the PDSCH mapping type. PDSCH mapping Type A or PDSCH mapping Type B may be indicated by TDRA. For PDSCH mapping Type A, the DMRS is located in the third symbol (symbol #2) or fourth symbol (symbol #3) in a slot. For PDSCH mapping Type B, the DMRS is allocated in the first symbol allocated for the PDSCH.
- PDSCH-to-HARQ_feedback timing indicator: This indicator indicates K1.

If the PDSCH is configured to transmit a maximum of one TB, an HARQ-ACK response may consist of one bit. If the PDSCH is configured to transmit a maximum of 2 TBs, the HARQ-ACK response may consist of 2 bits when spatial bundling is not configured and one bit when spatial bundling is configured. When an HARQ-ACK transmission timing for a plurality of PDSCHs is designated as slot n+K1, UCI transmitted in slot n+K1 includes an HARQ-ACK response for the plural PDSCHs.

In the present disclosure, an HARQ-ACK payload consisting of HARQ-ACK bit(s) for one or plural PDSCHs may be referred to as an HARQ-ACK codebook. The HARQ-ACK codebook may be categorized as i) a semi-static HARQ-ACK codebook, ii) a dynamic HARQ-ACK codebook and iii) HARQ process based HARQ-ACK codebook, according to an HARQ-ACK payload determination scheme.

In the case of the semi-static HARQ-ACK codebook, parameters related to an HARQ-ACK payload size that the UE is to report are semi-statically determined by a (UE-specific) higher layer (e.g., RRC) signal. The HARQ-ACK payload size of the semi-static HARQ-ACK codebook, e.g., the (maximum) HARQ-ACK payload (size) transmitted through one PUCCH in one slot, may be determined based on the number of HARQ-ACK bits corresponding to a combination (hereinafter, bundling window) of all DL carriers (i.e., DL serving cells) configured for the UE and all DL scheduling slots (or PDSCH transmission slots or PDCCH monitoring slots) for which the HARQ-ACK transmission timing may be indicated. That is, in a semi-static HARQ-ACK codebook scheme, the size of the HARQ-ACK codebook is fixed (to a maximum value) regardless of the number of actually scheduled DL data. For example, DL grant DCI (PDCCH) includes PDSCH-to-HARQ-ACK timing information, and the PDSCH-to-HARQ-ACK timing information may have one (e.g., k) of a plurality of values. For example, when the PDSCH is received in slot #m and the PDSCH-to-HARQ-ACK timing information in the DL grant DCI (PDCCH) for scheduling the PDSCH indicates k, the HARQ-ACK information for the PDSCH may be transmitted in slot #(m+k). As an example, k ∈ {1, 2, 3, 4, 5, 6, 7, 8}. When the HARQ-ACK information is transmitted in slot #n, the HARQ-ACK information may include possible maximum HARQ-ACK based on the bundling window. That is, HARQ-ACK information of slot #n may include HARQ-ACK corresponding to slot #(n-k). For example, when k ∈ {1, 2, 3, 4, 5, 6, 7, 8}, the HARQ-ACK information of slot #n may include HARQ-ACK corresponding to slot #(n-8) to slot #(n-1) regardless of actual DL data reception (i.e., HARQ-ACK of a maximum number). Here, the HARQ-ACK information may be replaced with an HARQ-ACK codebook or an HARQ-ACK payload. A slot may be understood/replaced as/with a candidate occasion for DL data reception. As described in the example, the bundling window may be determined based on the PDSCH-to-HARQ-ACK timing based on an HARQ-ACK slot, and a PDSCH-to-HARQ-ACK timing set may have predefined values (e.g., {1, 2, 3, 4, 5, 6, 7, 8}) or may be configured by higher layer (RRC) signaling. The semi-static HARQ-ACK codebook is referred to as a Type-1 HARQ-ACK codebook. For the Type-1 HARQ-ACK codebook, the number of bits to be transmitted in an HARQ-ACK report is fixed and may be potentially large. If many cells are configured but only few cells are scheduled, the Type-1 HARQ-ACK codebook may be inefficient.

In the case of the dynamic HARQ-ACK codebook, the HARQ-ACK payload size that the UE is to report may be dynamically changed by the DCI etc. The dynamic HARQ-ACK codebook is referred to as a Type-2 HARQ-ACK codebook. The Type-2 HARQ-ACK codebook may be considered as optimized HARQ-ACK feedback because the UE sends feedback only for scheduled serving cells. However, in poor channel conditions, the UE may erroneously determine the number of scheduled serving cells. To solve this problem, a downlink assignment index (DAI) may be included as a part of DCI. For example, in the dynamic HARQ-ACK codebook scheme, DL scheduling DCI may include a counter-DAI (i.e., c-DAI) and/or a total-DAI (i.e., t-DAI). Here, the DAI indicates a downlink assignment index and is used for the BS to inform the UE of transmitted or scheduled PDSCH(s) for which HARQ-ACK(s) are to be included in one HARQ-ACK transmission. Particularly, the c-DAI is an index indicating order between PDCCHs carrying DL scheduling DCI (hereinafter, DL scheduling PDCCHs), and t-DAI is an index indicating the total number of DL scheduling PDCCHs up to a current slot in which a PDCCH with the t-DAI is present.

In the case of an HARQ-ACK codebook based on HARQ processes, the HARQ-ACK payload is determined based on all HARQ processes of all configured (or activated) serving cells in a PUCCH group. For example, the size of the HARQ-ACK payload to be reported by the UE using the HARQ-ACK codebook based on HARQ processes may be determined based on the number of all configured or activated serving cells in the PUCCH group configured for the UE and the number of HARQ processes for the serving cells. The HARQ-ACK codebook based on HARQ processes is also referred to as a Type-3 HARQ-ACK codebook. The type-3 HARQ-ACK codebook may be applied to one-shot feedback.

As one of the use cases of URLLC, a time-sensitive networking (TSN) may be included. The TSN refers to a communication network system where all devices within a specific area are assumed to be time-synchronized with the same clock time for real-time communication and based on the time synchronization, motion control for devices or collaborative robots in factories is established. In addition, XR services may be included as one of the alternative applications of the NR system.

XR refers to an immersive technology and service that provides users with an environment in which the users are capable of communicating and living without constraints of time and space in virtual spaces similar to reality, utilizing technologies such as virtual reality (VR), augmented reality (AR), mixed reality (MR), holograms, etc. XR is one of the major services to be introduced in the NR wireless communication system. Typically, XR has specific traffic with one or more DL video streams closely synchronized with frequent UL pose/control updates.

The successful implementation of XR requires support from wireless systems. In the 3GPP-based wireless communication system, for example, in the NR wireless communication system, the use of preconfigured resources such as SPS/CG is being considered to support XR. For example, the BS may provide an SPS/CG configuration to the UE in consideration of the average inter-arrival time of packets. However, the actual inter-arrival times of packets are not consistent (random) due to jitter, which refers to a deviation in time occurring unintentionally in periodic signals. In XR, jitter occurs because the time required to process frames before transmitting the frames varies due to different amounts of information per frame.

In NR, the UE may be configured with one or more SPS PDSCHs or CG PUSCHs for periodic transmission and reception, low latency, and low PDCCH overhead. The configured/indicated resources may be repeated in the time domain with a periodicity determined by each SPS/CG configuration. That is, initially configured/indicated resource allocation may be repeated with a periodicity configured by the SPS/CG configuration, and the UE may perform DL reception and/or UL transmission on the corresponding resources without any separate PDCCH reception processes. There are various types of XR data. Among the various types of data, sensor information, location information, and video data of the UE, which are generally reported with a specific periodicity, may be transmitted and received on SPS/CG resources. The traffic arrival time of such data is not consistent due to the following reasons: video encoding times, sensor measurement times, higher layer operations, or changes in network routing, which may lead to jitter. Additionally, the size of radio resources required for transmission may vary depending on the type of frames and encoding methods used by the UE/BS to transmit videos.

To support such video data transmission, if radio resources are allocated based on the largest radio resource size required by the BS, it may lead to wastage of radio resources in most cases of video information transmission. If radio resources are allocated based on a smaller radio resource size, it may lead to additional radio resource allocation when larger traffic occurs, resulting in additional latency.

Additionally, some data is generated based on events, and thus it is difficult to accurately determine a time at which the data is generated. To reduce the latency caused by scheduling, the use of SPS/CG resources for such data may also be considered. In this case, a skipping method may be considered. According to the skipping method, a sufficient number of resources are allocated at short intervals to prepare for data occurrence, and the UE or BS selectively use some of the resources and does not use other resources. However, to skip transmission and reception, it is necessary to appropriately consider response signals to check the reception and transmission statuses between the UE and BS. If the UE transmits a response signal even for transmission that is not received, the BS needs to prepare resources for the UE to transmit response signals at all times. Considering that the skipping method is based on configuring a sufficient number of radio resources, configuring response signal resources for all radio resources may impose a significant UL burden. In addition, considering that such resources are capable of being multiplexed among UEs, the burden on UL resources needs to be given careful consideration.

The above needs to be taken into consideration when using XR services or similar third-party services. For example, to effectively transmit information such as videos where the payload size of various services or traffic changes dynamically, it may be considered that the UE selectively uses a CG PUSCH configured in SPS/CG and reports unselected radio resources to the BS in advance. This operation allows the BS to alleviate the burden on UL radio resources by using the resources for other UL transmissions.

Hereinafter, some implementations of the present disclosure will be described. In the implementations, when the UE is configured with a plurality of radio resources to receive video information required for various services or XR, if the UE attempts to transmit or receive only on some radio resource(s) among the configured radio resources and does not use the remaining radio resource(s), the UE may report the unused radio resource(s) to the BS such that the BS may allocate the reported radio resource(s) to the UE or another UE (or other UEs).

In the following, the implementations of the present disclosure will be described based on DL SPS and UL CG radio resources, which are semi-persistently configured. However, the implementations of the present disclosure are not limited thereto and may also be applied to radio resources allocated through dynamic scheduling received by the UE. For example, implementation(s) of the present disclosure where the UE determines one HARQ-ACK timing for a plurality of DL radio resources allocated to the UE may be applied regardless of whether it is an SPS PDSCH or a PDSCH indicated by dynamic scheduling. In addition, when a plurality of radio resources are not configured semi-persistently but are configured through dynamic indications, for example, when a plurality of radio resources are configured at once through DCI, the implementations of the present disclosure may be applied. Therefore, the implementations of the present disclosure may be applied to all types of transmission/reception methods expected by the BS and UE even without separate explanations. Hereinafter, for the convenience of explanation, the implementations of the present disclosure are described using the general term "SPS" to collectively refer to semi-persistently configured radio resources (e.g., DL/UL SPS, CG, etc.).

In some implementations of the present disclosure, the term "transmission occasion (TO)" may refer to radio resources configured for SPS/CG purposes (e.g., SPS PDSCH or CG PUSCH). An entity performing transmission (e.g., BS for DL or UE for UL) may attempt transmission on the TO, while a receiver (e.g., UE for DL or BS for UL) may expect transmission and attempt reception on each TO. In the present disclosure, the term "TO" is interchangeably used with a transmission opportunity. The TO or transmission opportunity is simply referred to as an occasion.

Hereinafter, the implementations of the present disclosure will be described based on the NR system, but the implementations of the present disclosure are not limited to transmission/reception in NR. In addition, while the implementations of the present disclosure will be described by taking as an example the characteristics and structures of XR services, the implementations of the present disclosure are not limited to supporting the XR services. In other words, the implementations of the present disclosure are applicable to the structures and services of all wireless communication transmission/reception even without separate explanations.

Hereinafter, some implementations of the present disclosure regarding methods and procedures for the UE to notify the BS of radio resources to be unused will be described. The implementations of the present disclosure may include methods for the BS to allocate PDSCH/PUSCH radio resource(s) to the UE and methods for the UE to perform DL reception or UL reception on the allocated radio resource. Some implementations of the present disclosure may include methods for the UE to transmit a HARQ-ACK PUCCH response in response to PDSCH reception and methods for the UE to receive DCI retransmitted by the BS over a PDCCH after PUSCH transmission. In some implementations of the present disclosure, the UE may transmit signals and channels to announce the capabilities and/or service requirements thereof, and the BS may receive the signals and channels.

FIG. 8 illustrates an operation flow of a UE according to some implementations of the present disclosure, and FIG. 9 illustrates an operation flow of a BS according to some implementations of the present disclosure.

Referring to FIG. 8, the UE may receive an RRC configuration related to unused resource indication/information (URI), that is, RRC parameter(s) related with the URI and an RRC configuration related to a CG PUSCH (e.g., CG configuration) (S801). The CG configuration may be automatically activated or initially deactivated. When the UE has UL traffic/data to transmit, that is, when UL traffic/data becomes available for transmission, the UE may determine or predict CG PUSCH resources (i.e., CG PUSCH occasions) required for transmission of the UL traffic/data (S803). The UE may report the URI to the BS based on the required CG PUSCH resources (or the number thereof) (S805). The UE may transmit PUSCH(s) carrying the traffic/data using the CG PUSCH resources (S807).

Referring to FIG. 9, the BS may provide the UE with an RRC configuration for URI and an RRC configuration (e.g., CG configuration) related to a CG PUSCH (S901). The BS may receive the URI from the UE (S903). The BS may receive PUSCH(s) on CG PUSCH resource(s) based on the CG configuration (S905). The BS may perform UL scheduling based on the URI.

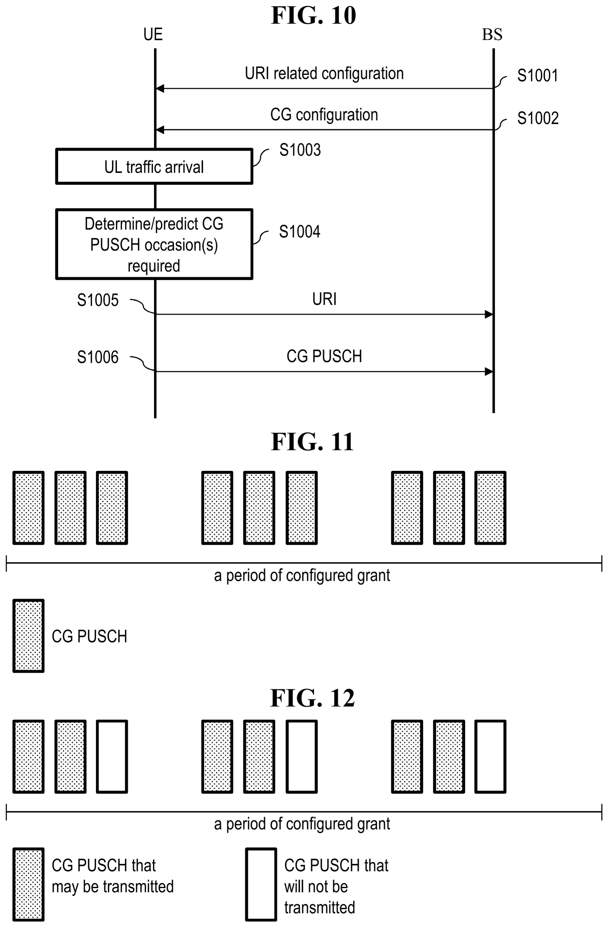

FIG. 10 illustrates signal transmission/reception flows of a UE and BS according to some implementations in the present disclosure.

Referring to FIG. 10, the UE may receive an RRC configuration for URI and an RRC configuration (e.g., IE *ConfiguredGrantConfig*) for transmitting a CG PUSCH from the BS (S1001 and S1002). A semi-persistent configuration (i.e., CG PUSCH configuration) provided to the UE may be automatically activated or initially deactivated. When the UE has UL traffic (S1003) and intends to perform UL transmission on the CG PUSCH, the UE provided with the RRC configuration for the URI may determine or predict CG PUSCH occasion(s) to be used in consideration of the buffer status of the UE and the characteristics of the CG PUSCH. (S1004). The UE may report information regarding unused CG PUSCH resources (i.e., CG PUSCH occasions) to the BS in consideration of the number of CG PUSCHs determined or predicted to be used (S1005). Upon receiving the information, the BS may release the unused CG PUSCH resources only at the corresponding time and schedule UL transmission for other purposes to the UE or other UEs. The UE may perform UL transmission on other CG PUSCH resources except for the CG PUSCH resource reported as unused, and the BS may attempt UL reception on radio resources among the other CG PUSCH resources except for the CG PUSCH resource reported as unused (S 1006).

The UE may provide the BS with additional URI for a CG PUSCH radio resource (i.e., CG PUSCH occasion) that was previously indicated as unused or used. According to some implementations of the present disclosure, the BS may distinguish between a radio resource whose usage status of used or unused is changed by the additional URI and a radio resource that is not, and also distinguish a given URI. For example, the BS may determine whether a given URI is valid. That is, when a condition for allowing a change in the usage status of used/unused is satisfied, the BS may determine the URI to be valid, and otherwise, it may ignore the URI.

The implementations/methods to be described later may be selectively applied. Alternatively, each implementation/method mentioned below may operate independently without being combined with other implementations/methods, or one or more implementations/methods may operate in a coordinated manner. Some terms, symbols, sequences, etc., used in the present disclosure may be replaced with different terms, symbols, sequences, etc.

Implementations/methods described in the present disclosure may be defined to be applied only when the UE receives relevant configuration information from the BS (or core network). The configuration information may be provided via a higher layer signal (e.g., SIB or RRC signaling). Alternatively, information configured through a higher layer signal (e.g., SIB or RRC signaling) may be activated/deactivated through separate signaling (e.g., DCI or MAC control element (CE)). In addition, the UE may be configured to report information (e.g., capability) on whether the UE is capable of supporting the implementations/methods of the present disclosure, and the BS (or core network) may be configured to receive the information

In some implementations of the present disclosure, URI may be referred to as unused transmission occasion UCI (UTO-UCI) because the URI serves the role of notifying the BS of unused transmission occasions.

Regarding URI, the following implementations may be considered for efficient use of radio resources in a system.

As one example, in some implementations, the BS may indicate and configure one or more CG PUSCHs during a predetermined time interval T to the UE. As one example, the BS includes information regarding a plurality of TDRAs in one CG configuration or activates a related CG through DCI containing the TDRA information, thereby configuring a plurality of radio resources (i.e., a plurality of CG PUSCH occasions) within a periodicity. For example, the BS may provide the UE with a CG configuration including a plurality of consecutively configured UL grants within a single periodicity. Depending on the CG configuration, multiple CG PUSCH occasions may occur within the single periodicity of the CG configuration.

As another example, it may be considered that the BS indicates and configures one or more SPS/CG radio resources to the UE and allocates a plurality of SPS/CG radio resources to repeatedly transmit one TB within a periodicity or within a predetermined time range. For example, one or more SPS/CG configurations may be provided, and PDSCH/PUSCH occasions according to the one or more SPS/CG configurations may occur within the periodicity or within the predetermined time range.

As another example, it may be considered that the BS indicates and configures one or more SPS/CG radio resources to the UE and allocates a plurality of SPS/CG radio resources to transmit multiple TBs within a periodicity or within a predetermined time range. For example, one or more SPS/CG configurations may be provided, and PDSCH/PUSCH occasions according to the one or more SPS/CG configurations may occur within the periodicity or within the predetermined time range.

When the UE has UL traffic and thus needs to perform configured CG PUSCH transmission, the UE may not use all the configured CG PUSCHs within the time interval T. For example, the UE may determine to use some of the configured CG PUSCHs within the time interval T and determine not to use some CG PUSCHs. In addition, the UE may withhold the determination to use some CG PUSCHs for future UL transmission. In some implementations of the present disclosure, the UE may transmit information regarding the CG PUSCH(s) that the UE determines not to use (hereinafter referred to as URI) to the BS. For example, the UE may transmit to the BS information regarding the radio resource(s) that the UE determines to use and information regarding the CG PUSCH(s) determined to be necessary for future UL transmission. The UE may transmit no user data on a CG PUSCH occasion that the UE does not notify to use or on a CG PUSCH occasion that the UE notifies not to use. For example, for the CG PUSCH occasion that the UE notifies not to use, the BS may assume that the UE does not generate a MAC PDU to be transmitted on a corresponding PUSCH, has no MAC PDU to be transmitted on the corresponding PUSCH, or skips the CG PUSCH occasion. Alternatively, a CG indicated as unused on the MAC layer may be considered as being de-prioritized in a logical channel (LCH) prioritization process.

Such operations may be considered as being performed under an explicit request from the UE. For example, when using a CG PUSCH, the UE may inform the BS whether or not to use configured radio resources through URI according to some implementations of the present disclosure, only in cases where the availability of the configured CG PUSCH is diminished. To ensure that the BS receives information regarding the use of each radio resource notified by the UE, a separate message indicating the use of URI may be transmitted through L1 signaling (e.g., PUCCH, PUSCH, etc.) or higher layer signaling. Upon receiving the corresponding message, the BS may assume that information regarding whether the UE uses CG PUSCH occasion(s) is included in a CG PUSCH transmitted by the UE or a separately configured PUCCH and then perform reception.

Alternatively, when using URI, the operations may be considered as being performed under an explicit request from the BS. For example, the BS may transmit a separate message, which notifies that the BS will use URI, to the UE through L1 signaling (e.g., DCI) or higher layer signaling (e.g., RRC signaling, MAC signaling, etc.). Upon receiving the message, the UE may transmit information on whether or not to use CG PUSCH occasion(s), i.e., URI, over a CG PUSCH or a separately configured PUCCH. The BS may receive the URI by assuming the UE operation.

For URI transmission, the UE may need to possess specific capabilities. In such cases, the UE may notify the availability of URI to the BS through a capability report. Upon receiving the capability report, the BS may perform the BS operations only to UE(s) capable of using URI.

Operation(s) according to some implementations of the present disclosure related to URI may be performed per CG configuration configured for the UE. For example, whether to use the operation(s) according to some implementations of the present disclosure may be configured separately for each CG configuration, and the UE may perform URI transmission only for a CG configuration configured to use a URI.

Operation(s) according to some implementations of the present disclosure may be performed per CG configuration configured for the UE. For example, whether to use operation(s) according to some implementations of the present disclosure related to URI may be configured separately for each CG configuration, and the UE may perform URI transmission only for a CG configuration configured to use a URI.

In some implementations of the present disclosure, if the BS does not receive a separate message from the UE or if the UE does not transmit a separate message to the BS, it may be assumed that all configured CG PUSCH occasions are not unused.

As a transmission method in which the UE transmits, to the BS, information (hereinafter, URI) about a CG PUSCH that it has decided not to use, the UE may transmit a URI through UCI piggybacked to a CG PUSCH transmission. In other words, the UE may multiplex the URI as UCI onto a PUSCH. For this purpose, the URI may be assumed to be a type of CG-UCI in some implementations. For example, the URI may be treated and multiplexed as the CG-UCI described in 3GPP TS 38.212. The CG configuration for a shared spectrum includes a higher layer parameter *cgRetransmissionTimer.* If the UE does not receive a CG-DL feedback indicator (i.e., configured grant downlink feedback information (CG-DFI)) that provides HARQ-ACK information for initial transmission of a TB on a PUSCH configured by the CG configuration before *cgRetransmissionTimer* expires, the UE may assume that the TB is not decoded correctly and then perform autonomous retransmission on a next CG PUSCH occasion based on the CG configuration. UCI, called CG-UCI, may be included in every CG PUSCH transmission. Here, the CG-UCI includes information on a HARQ process ID, an RV, a new data indicator (NDI), and channel occupancy time (COT) sharing information. When other CG-UCI is already included in the PUSCH, the URI may be treated as an additional bit field within the corresponding CG-UCI, and the UE may jointly encode the URI and the other CG-UCI, thus multiplexing them as a single CG-UCI.

### <Implementation 1: How to Apply URI within Period>

When the UE transmits a URI to the BS, the URI may include information about CG PUSCH occasions included in a time interval T. In some implementations, the time interval T may be determined based on a CG periodicity included in a CG configuration for a CG PUSCH carrying a URI. For example, when the periodicity is P, the time interval T may be P, 2P, 3P, or the like.

FIG. 11 illustrates CG PUSCHs configured according to some implementations of the present disclosure, and FIG. 12 illustrates CG PUSCHs to be transmitted/not transmitted by a UE.

When a plurality of radio resources may be configured at arbitrary positions within a period, a transport block (TB) may be transmitted a plurality of times within the single period. A BS serving a specific type of traffic (e.g., XR traffic) may arrange a bundle of resources at a predetermined interval within a long period to receive voice/image information of a UE. For example, they may be arranged as illustrated in FIG. 11. In this case, the UE may need to apply a URI to each bundle in some implementations. For example, when the movement of the user decreases, the size of generated image information may become smaller, and the size of a TB that the UE needs to transmit may be reduced compared to before. In this case, the UE may need to reduce the number of CG PUSCHs transmitted in each bundle rather than discontinuing transmission in the period. For example, CG PUSCHs may be transmitted as illustrated in FIG. 12.

The UE may transmit a URI for the time interval T. Alternatively, instead of providing a URI for the time interval T, the UE may divide the time interval T into several ranges and provide a single URI that may be applied to each range, and the BS may apply the URI to each range divided from the time interval T in the same way as the UE.

In other words, with the time interval T divided into a plurality of smaller time ranges, the UE may configure/indicate a URI corresponding to a single small time range, Ts. This URI may be applied equally (repeatedly) to each time range Ts within the time interval T. The time interval T and the time range Ts may be configured by the BS. When the time interval T is a multiple of the CG periodicity, the time range Ts may be configured as a single CG period, a multiple of the CG period, or a fraction of the CG period (e.g., 1/N). When the time interval T is a single CG period, the time range Ts may be configured as a fraction of the CG period (e.g., 1/N).

The URI may indicate the number of unused CG PUSCH resources (i.e., the number of unused CG PUSCH occasions) from the end of each range Ts (or CG PUSCH period).

Alternatively, the URI may indicate the number of unused CG PUSCH resources from the beginning of each range Ts (or CG PUSCH period).

Alternatively, the URI may indicate a time window in which unused CG PUSCH resources are located, from the end of each range Ts (or CG PUSCH period).

Alternatively, the URI may indicate a time point where the first unused CG PUSCH resource is located, from the beginning of each range Ts (or CG PUSCH period).

Alternatively, the URI may indicate the start of unused CG PUSCH resources and the number of the unused CG PUSCH resources within each range Ts (or CG PUSCH period).

Alternatively, the URI may indicate a bitmap of unused CG PUSCH resources within each range Ts (or CG PUSCH period). For example, an unused resource may be indicated by '1' and an available resource by '0'. In other words, a bit value of '0' in the URI may indicate that the UE may transmit a CG PUSCH at a corresponding transmission occasion (TO), while a bit value of '1' may indicate that the UE will not transmit a CG PUSCH at a corresponding TO in some implementations of the present disclosure.

The following may be additionally considered.

### <Implementation 2: How to Divide Time Range>

In using Implementation 1, it may be considered to divide a given time interval T or period into a plurality of time ranges and apply a URI to each time range Ts. The time range Ts may be determined in the following manner.
> When the time interval T is a single CG period or a multiple of the CG period, one period may be determined as a single time range Ts.
> When the time interval T is a single CG period or a multiple of the CG period, a 1/N period may be determined as a single time range Ts. Herein, N may be 2 or 7. Alternatively, N may be given by L1 signaling (e.g., DCI) and higher-layer signaling from the BS. In some implementations, when a single time range is not divisible in units of symbols (i.e., when the boundary of the time range is not aligned with a symbol boundary), a symbol straddling time ranges may be assumed to be included in a preceding time range.

### <Implementation 3: URI Transmission Position>

In transmitting a URI, the UE may transmit the URI on the first CG PUSCH within a period, on the first CG PUSCH (e.g., the first transmitted CG PUSCH or a CG PUSCH transmitted at the first transmission occasion) of the time interval T, or when the time interval T is divided into a plurality of ranges, on the first CG PUSCH (e.g., the first transmitted CG PUSCH or a CG PUSCH transmitted at the first transmission occasion) in each range.

Alternatively, the UE may transmit a URI on every CG PUSCH.

Alternatively, a URI transmission position in a time range may be determined in the following method. First, it may be assumed that the URI is transmitted at a CG transmission occasion that occurs after a specific time X has elapsed since the last URI transmission. This may make URI transmission points uniformly distributed in time, even if CG PUSCHs are not configured to be uniformly distributed. The time X may be determined based on L1 signaling or higher-layer signaling from the BS or derived from other RRC parameters (e.g., a periodicity in a CG configuration).

### <Implementation 4: How to Handle Duplicated URI>

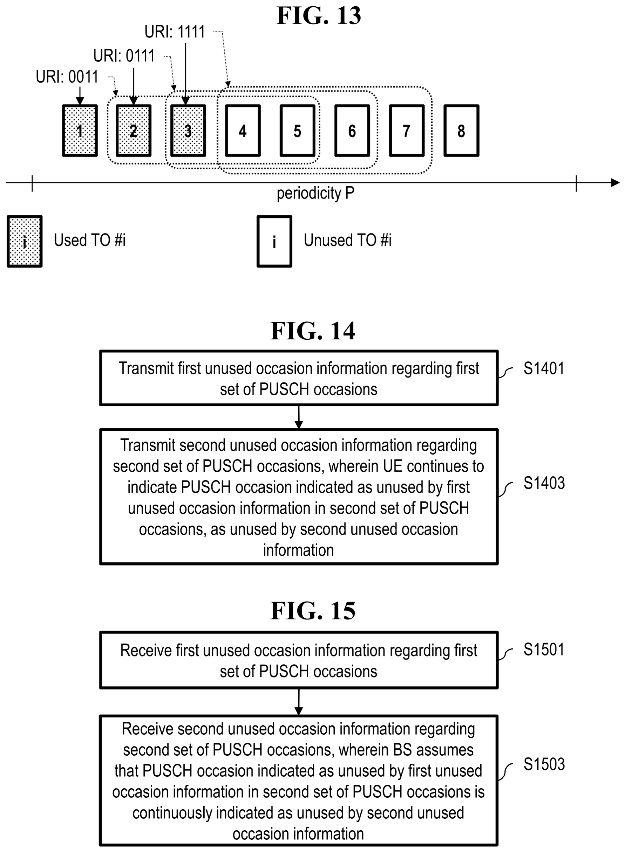

FIG. 13 illustrates exemplary URI transmissions. In FIG. 13, "TO" represents a transmission occasion. In the examples of FIG. 13, a bit value of'0' in a URI indicates that the UE may transmit a CG PUSCH at a corresponding TO in the case of CG, while a bit value of "1" in the URI indicates that the UE will not transmit a CG PUSCH at a corresponding TO in the case of CG. In the examples of FIG. 13, a URI is represented as indicating the availability of TOs within a period. However, the TOs whose availability may be indicated by the URI may not be limited to a single period. For example, according to some implementations described later, the URI may indicate the availability of TO(s) within a period that is not identical to a period to which a PUCCH/PUSCH carrying the URI belongs. In another example, according to some implementations described later, the URI may indicate the availability of TOs within a plurality of periods, depending on the length of the URI.

When there may be a plurality of URI transmission positions within the time interval T, it may occur that a single TO is indicated by a plurality of URIs. For example, when a URI transmitted at CG PUSCH occasion #i indicates four CG PUSCH occasions (CG PUSCH occasions #(i+1) through (i+4)) following CG PUSCH occasion #i as used or unused, referring to FIG. 13, the bits '0011' of a URI transmitted at CG PUSCH occasion #1 are mapped to CG PUSCH occasions #2 to #5 one-to-one in ascending order, the bits '0111' of a URI transmitted at CG PUSCH occasion #2 are mapped to CG PUSCH occasions #3 to #6 one-to-one in ascending order, and the bits '0011' of a URI transmitted at CG PUSCH occasion #3 are mapped to CG PUSCH occasions #4 to #7 one-to-one in ascending order. In this case, PUSCH occasions #3 through #6 may be indicated by a plurality of URIs. In this case, the UE may use the following methods.
> The UE may perform a URI transmission selectively. That is, the UE may not transmit a URI on a CG PUSCH available for the URI transmission.
>> When a plurality of URIs are transmitted for a PUSCH occasion, the UE and the BS may assume that the last indicated URI is continuously applied. This may be useful when an indicated URI is applied individually to each time range, as described above.
>> Alternatively, it may be assumed that a URI is applied temporarily. When a URI is not indicated by the UE for a specific time T, the BS assumes that all CG PUSCH radio resources are available. The specific time T may be determined based on L1 signaling (e.g., DCI) or higher-layer signaling (e.g., RRC signaling) from the BS.
> For a TO for which a plurality of URIs are provided, the UE may use the following methods.
>> When at least one URI indicates the TO as unused, the BS may assume that the TO is unused.
>> When no URI indicates the TO as unused, the BS may assume that the TO is available.
>> The UE may assume that it is not capable of indicating a TO previously indicated as unused as available/transmittable again by a URI.
>> The UE may indicate a TO as unused by a URI, only when the TO was previously indicated as available/transmittable or only when no URI was indicated for the TO.
>> That is, a resource once indicated as unused by the UE may not be indicated as available again by another URI.
>> That is, the BS may apply the (most recently received) URI only to resources that were previously indicated as available by the UE or a TO which was indicated by no URI.
>> When changing a PUSCH occasion from unused to used is allowed, the BS may find it difficult to use a PUSCH occasion indicated as unused for other purposes, because the UE may change the usage status of the PUSCH occasion at any time. Therefore, according to this method, since the UE will indicate only a resource that the UE is sure not to use as unused and transmit a URI, the BS may trust that a PUSCH occasion once indicated as unused will not be used by the UE and may use it for other purposes.

### <Implementation 5: How to Handle URI with CG Configuration Changes>

When a CG configuration used for a URI transmission is changed by activation DCI or released by release DCI, or when CG configuration information is changed by an RRC re-configuration, the CG PUSCH occasion associated with the previously transmitted URI may disappear or change. In this case, applying the URI may result in URI information being applied to a different CG PUSCH occasion from the one originally considered at the time the URI is transmitted. Moreover, when Implementation 4 is used, there may be difficulties in transmitting such information (i.e., URI) anew. For example, when the modulation and coding scheme (MCS) of a CG PUSCH occasion that was indicated as unused/used by the previous URI is changed by activation DCI, it may be ambiguous whether the CG PUSCH occasion may be indicated as used/unused by a new URI. To solve this problem, the following may be considered.
> When a CG configuration used for transmitting a URI (i.e., a CG configuration that configures a CG PUSCH used for transmitting the URI) is changed by activation DCI or released by release DCI, or when CG configuration information is changed by an RRC reconfiguration, a URI transmitted based on the CG configuration or a URI associated with a PUSCH occasions of the CG configuration may be considered invalid. The BS may not use the invalid URI to determine whether the UE transmits on each PUSCH TO, and the UE may not consider the invalid URI in other UE operation(s), such as those according to Implementation 4.
> When the UE is capable of transmitting a URI a plurality of times for the same TO using Implementation 4 (i.e., when the same TO is indicated as used or unused by a plurality of URIs), the UE may assume that a TO previously indicated as unused may not be indicated as used/available again by a (new) URI. In this case, when a CG configuration used for a URI transmission is changed by activation DCI or released by release DCI, or when CG configuration information is changed by an RRC reconfiguration of the CG configuration, the UE may still be able to indicate a TO as used/available again by a URI, even if it was previously indicated as unused by the previous URI. For example, when CG PUSCHs in slots n, n+1, n+2, and n+3 are indicated (i.e., activated) by first activation DCI, and the UE transmits a first URI on the CG PUSCH in slot n to indicate "unused" for the CG PUSCHs in slots n+1, n+2, and n+3, and then newly indicates the CG PUSCHs in slots n+2, n+3, n+4, and n+5 by second activation DCI, the UE and the BS may subsequently indicate/expect the CG PUSCHs (in slots n+2 and n+3) indicated as "unused" by the first URI to be "used/available" by a different second URI.
> Alternatively, to prevent this problem, the application range of a URI may be limited to CG PUSCH TOs activated by the same DCI as a CG PUSCH on which the URI is transmitted. That is, for a CG PUSCH indicated by new activation DCI, a URI previously transmitted on a CG PUSCH scheduled by the previous activation DCI does not apply. For example, when CG PUSCHs in slots n, n+1, n+2, and n+3 are indicated (i.e., activated) by first activation DCI, and the UE transmits a first URI on the CG PUSCH in slot n to indicate the CG PUSCHs in slots n+1, n+2, and n+3 as unused, and then newly indicates the CG PUSCHs in slots n+2, n+3, n+4, and n+5 by second activation DCI, the UE and the BS may operate to ignore CG PUSCH use/non-use information (for slots n+2 and n+3) carried in the first URI.
> Alternatively, to prevent this problem, the application range of a URI may be limited to CG PUSCH TOs activated by the same RRC message as a CG PUSCH on which the URI is transmitted. That is, when a CG PUSCH is changed by an RRC reconfiguration, the previous URI transmitted through other information does not apply to a reconfigured CG PUSCH TO. For example, when CG PUSCHs in slots n, n+1, n+2, and n+3 are configured through a first RRC message, and the UE transmits a first URI on the CG PUSCH in slot n to indicate the CG PUSCHs in slots n+1, n+2, and n+3 as used/unused, and a second RRC message then newly configures the CG PUSCHs in slots n+2, n+3, n+4, and n+5, the UE and the BS may operate to ignore CG PUSCH use/non-use information (for slots n+2 and n+3) carried in the first URI.

The above-described Implementation 1 through Implementation 5 may be applied independently or in combination.

Through some implementations of the present disclosure, a UE may selectively use a CG PUSCH as before and report an unselected (CG PUSCH) radio resource to a BS in advance. The UE may perform this reporting redundantly for a single resource, and the BS may apply the report without ambiguity using some implementations of the present disclosure. Even when a period is very long, the UE may keep the size of a URI at or below a specific size using some implementations of the present disclosure. This allows the BS to use the radio resource for other UL transmissions, thereby reducing the overhead of UL radio resources, while effectively transmitting information such as videos where the payload size of various services or traffic changes dynamically. According to some implementations of the present disclosure, the actual usage status of radio resources scheduled for the UE may be efficiently reported to the BS.

FIG. 14 illustrates a flow of UL signal transmission at a UE according to some implementations of the present disclosure.

The UE may perform operations according to some implementations of the present disclosure in association with transmission of UL signals. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

Referring to FIG. 14, the method of the UE or the operations in the UE, the processing device, the computer-readable (non-transitory) storage medium, and/or the computer program product may include: receiving a PUSCH configuration; transmitting first unused occasion information including information about a PUSCH occasion unused by the UE in a first set of PUSCH occasions related to the PUSCH configuration (S1401); and transmitting second unused occasion information including information regarding an unused PUSCH occasion in a second set of PUSCH occasions related to the PUSCH configuration (S1403). Based on the second set of PUSCH occasions including a first PUSCH occasion indicated as unused by the first unused occasion information, the UE continues to indicate the first PUSCH occasion as unused by the second unused occasion information.

In some implementations, based on the second set of PUSCH occasions including the first PUSCH occasion indicated as unused by the second unused occasion information, the UE may not be allowed to indicate the first PUSCH occasion as not unused by the second unused occasion information.

In some implementations, based on the second set of PUSCH occasions including a second PUSCH occasion indicated as not unused by the second unused occasion information, the UE may be allowed to indicate the second PUSCH occasion as unused by the second unused occasion information.

In some implementations, the first unused occasion information may indicate whether each PUSCH occasion in the first set of PUSCH occasions is unused, and the second unused occasion information may indicate whether each PUSCH occasion in the second set of PUSCH occasions is unused.

In some implementations, the first unused occasion information may be transmitted on a first PUSCH based on the PUSCH configuration, and the second unused occasion information may be transmitted on a second PUSCH based on the PUSCH configuration.

In some implementations, the UE may not transmit a PUSCH at a PUSCH occasion indicated as unused by the first unused occasion information or the second unused occasion information.

In some implementations, the method or the operations may further include determining the first unused occasion information to be invalid, based on receiving activation DCI, release DCI, or RRC reconfiguration information related to the PUSCH configuration after transmitting the first unused occasion information.

FIG. 15 illustrates a flow of UL signal reception at a BS according to some implementations of the present disclosure.

The BS may perform operations according to some implementations of the present disclosure in association with reception of UL signals. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

Referring to FIG. 15, the method of the BS or the operations in the BS, the processing device, the computer-readable (non-transitory) storage medium, and/or the computer program product may include: transmitting a PUSCH configuration; receiving first unused occasion information including information regarding a PUSCH occasion unused by a UE in a first set of PUSCH occasions related to the PUSCH configuration (S1501); and receiving second unused occasion information including information regarding an unused PUSCH occasion in a second set of PUSCH occasions related to the PUSCH configuration (S1503). Based on the second set of PUSCH occasions including a first PUSCH occasion indicated as unused by the first unused occasion information, the first PUSCH occasion may be continuously indicated as unused by the second unused occasion information.

In some implementations, based on the second set of PUSCH occasions including the first PUSCH occasion indicated as unused by the second unused occasion information, the first PUSCH occasion may not be allowed to be indicated as not unused by the second unused occasion information.

In some implementations, based on the second set of PUSCH occasions including a second PUSCH occasion indicated as not unused by the second unused occasion information, the second PUSCH occasion may be allowed to be indicated as unused by the second unused occasion information.

In some implementations, the first unused occasion information may indicate whether each PUSCH occasion in the first set of PUSCH occasions is unused, and the second unused occasion information may indicate whether each PUSCH occasion in the second set of PUSCH occasions is unused.

In some implementations, the first unused occasion information may be received on a first PUSCH based on the PUSCH configuration, and the second unused occasion information may be received on a second PUSCH based on the PUSCH configuration.

In some implementations, a PUSCH may not be received at a PUSCH occasion indicated as unused by the first unused occasion information or the second unused occasion information.

In some implementations, the method or the operations may further include determining the first unused occasion information to be invalid, based on transmitting activation DCI, release DCI, or RRC reconfiguration information related to the PUSCH configuration after receiving the first unused occasion information.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method for transmitting an uplink signal by a user equipment (UE) in a wireless communication system, the method comprising:
receiving a physical uplink shared channel (PUSCH) configuration;
transmitting first unused occasion information including information regarding a PUSCH occasion unused by the UE in a first set of PUSCH occasions related to the PUSCH configuration; and
transmitting second unused occasion information including information regarding an unused PUSCH occasion in a second set of PUSCH occasions related to the PUSCH configuration,
wherein based on the second set of PUSCH occasions including a first PUSCH occasion indicated as unused by the first unused occasion information, the UE continues to indicate the first PUSCH occasion as unused by the second unused occasion information.

2. The method of claim 1, wherein based on the second set of PUSCH occasions including the first PUSCH occasion indicated as unused by the second unused occasion information, the UE is not allowed to indicate the first PUSCH occasion as not unused by the second unused occasion information.

3. The method of claim 1, wherein based on the second set of PUSCH occasions including a second PUSCH occasion indicated as not unused by the second unused occasion information, the UE is allowed to indicate the second PUSCH occasion as unused by the second unused occasion information.

4. The method of claim 1, wherein the first unused occasion information indicates whether each PUSCH occasion in the first set of PUSCH occasions is unused, and
wherein the second unused occasion information indicates whether each PUSCH occasion in the second set of PUSCH occasions is unused.

5. The method of claim 1, wherein the first unused occasion information is transmitted on a first PUSCH based on the PUSCH configuration, and
wherein the second unused occasion information is transmitted on a second PUSCH based on the PUSCH configuration.

6. The method of claim 1, wherein the UE does not transmit a PUSCH at a PUSCH occasion indicated as unused by the first unused occasion information or the second unused occasion information.

7. The method of claim 1, further comprising:
determining the first unused occasion information to be invalid, based on receiving activation downlink control information (DCI), release DCI, or radio resource control (RRC) reconfiguration information related to the PUSCH configuration after transmitting the first unused occasion information.

8. A user equipment (UE) for transmitting an uplink signal in a wireless communication system, the UE comprising:
at least one transceiver;
at least one processor; and
at least one computer memory operably connectable to the at least one processor, and storing instructions which, when executed, cause the at least one processor to perform operations comprising:
receiving a physical uplink shared channel (PUSCH) configuration;
transmitting first unused occasion information including information regarding a PUSCH occasion unused by the UE in a first set of PUSCH occasions related to the PUSCH configuration; and
transmitting second unused occasion information including information regarding an unused PUSCH occasion in a second set of PUSCH occasions related to the PUSCH configuration, and
wherein based on the second set of PUSCH occasions including a first PUSCH occasion indicated as unused by the first unused occasion information, the UE continues to indicate the first PUSCH occasion as unused by the second unused occasion information.

9. A processing device in a wireless communication system, comprising:
at least one processor; and
at least one computer memory operably connectable to the at least one processor, and storing instructions which, when executed, cause the at least one processor to perform operations comprising:
receiving a physical uplink shared channel (PUSCH) configuration;
transmitting first unused occasion information including information regarding a PUSCH occasion unused by a user equipment (UE) in a first set of PUSCH occasions related to the PUSCH configuration; and
transmitting second unused occasion information including information regarding an unused PUSCH occasion in a second set of PUSCH occasions related to the PUSCH configuration, and
wherein based on the second set of PUSCH occasions including a first PUSCH occasion indicated as unused by the first unused occasion information, the UE continues to indicate the first PUSCH occasion as unused by the second unused occasion information.

10. A computer-readable storage medium storing at least one program code including instructions which, when executed, cause at least one processor to perform operations comprising:
receiving a physical uplink shared channel (PUSCH) configuration;
transmitting first unused occasion information including information regarding a PUSCH occasion unused by a user equipment (UE) in a first set of PUSCH occasions related to the PUSCH configuration; and
transmitting second unused occasion information including information regarding an unused PUSCH occasion in a second set of PUSCH occasions related to the PUSCH configuration, and
wherein based on the second set of PUSCH occasions including a first PUSCH occasion indicated as unused by the first unused occasion information, the UE continuously indicates the first PUSCH occasion as unused by the second unused occasion information.

11. A method for receiving an uplink signal from a user equipment (UE) by a base station (BS) in a wireless communication system, the method comprising:
transmitting a physical uplink shared channel (PUSCH) configuration;
receiving first unused occasion information including information regarding a PUSCH occasion unused by the UE in a first set of PUSCH occasions related to the PUSCH configuration; and
receiving second unused occasion information including information regarding an unused PUSCH occasion in a second set of PUSCH occasions related to the PUSCH configuration,
wherein based on the second set of PUSCH occasions including a first PUSCH occasion indicated as unused by the first unused occasion information, the first PUSCH occasion is continuously indicated as unused by the second unused occasion information.

12. A base station (BS) for receiving an uplink signal from a user equipment (UE) in a wireless communication system, the BS comprising:
at least one transceiver;
at least one processor; and
at least one computer memory operably connectable to the at least one processor, and storing instructions which, when executed, cause the at least one processor to perform operations comprising:
transmitting a physical uplink shared channel (PUSCH) configuration;
receiving first unused occasion information including information regarding a PUSCH occasion unused by the UE in a first set of PUSCH occasions related to the PUSCH configuration; and
receiving second unused occasion information including information regarding an unused PUSCH occasion in a second set of PUSCH occasions related to the PUSCH configuration, and
wherein based on the second set of PUSCH occasions including a first PUSCH occasion indicated as unused by the first unused occasion information, the first PUSCH occasion is continuously indicated as unused by the second unused occasion information.

13. The BS of claim 12, wherein based on the second set of PUSCH occasions including the first PUSCH occasion indicated as unused by the second unused occasion information, the first PUSCH occasion is not allowed to be indicated as not unused by the second unused occasion information.

14. The BS of claim 12, wherein based on the second set of PUSCH occasions including a second PUSCH occasion indicated as not unused by the second unused occasion information, the second PUSCH occasion is allowed to be indicated as unused by the second unused occasion information.

15. The BS of claim 12, wherein the first unused occasion information indicates whether each PUSCH occasion in the first set of PUSCH occasions is unused, and
wherein the second unused occasion information indicates whether each PUSCH occasion in the second set of PUSCH occasions is unused.

16. The BS of claim 12, wherein the first unused occasion information is received on a first PUSCH based on the PUSCH configuration, and
wherein the second unused occasion information is received on a second PUSCH based on the PUSCH configuration.

17. The BS of claim 12, wherein a PUSCH is not received at a PUSCH occasion indicated as unused by the first unused occasion information or the second unused occasion information.

18. The BS of claim 12, wherein the operations further include determining the first unused occasion information to be invalid, based on transmitting activation downlink control information (DCI), release DCI, or radio resource control (RRC) reconfiguration information related to the PUSCH configuration after receiving the first unused occasion information.
